(19) Europäisches Patentamt
European Patent Office
Office européen des brevets

(11) **EP 3 690 771 A1**

(12) **EUROPEAN PATENT APPLICATION**
published in accordance with Art. 153(4) EPC

(43) Date of publication:
**05.08.2020 Bulletin 2020/32**

(51) Int Cl.:
*G06Q 10/06* (2012.01)   *G06Q 50/06* (2012.01)
*G06F 17/13* (2006.01)   *G06F 17/16* (2006.01)

(21) Application number: **18920133.8**

(22) Date of filing: **15.06.2018**

(86) International application number:
**PCT/CN2018/091537**

(87) International publication number:
**WO 2019/223048 (28.11.2019 Gazette 2019/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.05.2018 CN 201810514831**

(71) Applicant: **Shandong University**
**Jinan, Shandong 250061 (CN)**

(72) Inventors:
• **YE, Hua**
  **Jinan, Shandong 250061 (CN)**
• **MU, Qianying**
  **Jinan, Shandong 250061 (CN)**
• **LIU, Yutian**
  **Jinan, Shandong 250061 (CN)**

(74) Representative: **ZHAOffice SPRL**
**Rue de Bedauwe 13**
**5030 Gembloux (BE)**

(54) **DELAYED POWER SYSTEM STABILITY ANALYSIS METHOD BASED ON LOW-ORDER EIGD**

(57) The present invention provides a low-order and explicit infinitesimal generator discretization (EIGD) method for small signal stability analysis and control of large-scale delayed cyber-physical power system (DCPPS), and a system thereof. The system based on low-order EIGD method comprises the large-scale interconnected power system, wide-area measurement system (WAMS) and wide-area damping controller(WADC), forming a platform for dynamic monitoring as well as stability analysis and control of the large-scale interconnected power system. The method comprises that the dynamic model of DCPPS is established and linearized into a set of delayed differential equations; the state variables of DCPPS in delayed differential equations are rearranged and partitioned into two parts: delay-free state variables and delayed state variables; by utilizing the infinitesimal generator, the delayed differential equation is transformed into the ordinary differential equation; correspondingly, the characteristic equation of DCPPS can be transformed into the general characteristic equation that is described by the infinitesimal generator; the eigenvalues of DCPPS are identical to eigenvalues of the infinitesimal generator. By rearranging the state variables of the system, the present invention eliminates the discretization of the state variables not related to the time delay, reduces the dimension of the discretization matrix, and thereby reduces the calculation amount of the critical eigenvalues calculation of DCPPS.

Fig. 1

**Description**

**Field of Technology**

The invention relates to a field of power system stability analysis, especially a low-order explicit infinitesimal generator discretization (EIGD) based stability analysis method of delayed cyber-physical power systems.

**Background**

The operation and control of modern power system depend on a reliable information system all the time. Based on computer technology, communication technology and sensing technology, the power information system is closely and organically combined with the power primary system. Thus, power system is essentially a cyber-physical power system (CPPS). The wide-area measurement system (WAMS) builds a new information platform for stability analysis and control of large-scale interconnected power system. The WAMS-based advanced applications include power system dynamic monitoring and state estimation, parameter identification, stability monitoring and assessment, low frequency oscillation identification and wide-area damping control, fault location and wide-area protection, etc.

In recent 20 years, more and more scholars at home and abroad focus on the research of power system analysis and control based on WAMS. The wide-area measurements, such as relative rotor angles/speeds and active power, show good observability of some significant inter area oscillation modes. As an advanced application of WAMS, wide-area damping controllers (WADCs) stabilize interconnection power grids against weakly-damped interarea oscillation modes and enhance the transmission capacity of system by introducing wide-area measurements as remote feedback control signals, which has the good and wide application prospect. However, unneglectable communication delays are introduced during processing and transmitting wide-area measurements, which are ranging from several tens to hundreds of milliseconds. The communication delays may affect the performance of the controllers and bring operation risk to the power system.

Spectral discretization-based eigen-analysis methods (SDMs) can effectively analyze the effect of time delay on the small signal stability of CPPS. The principle is to map the spectrum of Delayed CPPS (DCPPS) into those of the state transfer equation and the abstract Cauchy equation by using spectral operators. Consequently, the intractable exponential terms no longer exist in their characteristic equations. For the convenience of description, the delayed cyber-physical power system is abbreviated as delayed power system. Thus, the critical eigenvalues of DCPPS can be computed by traditional eigen-analysis methods.

For example, a Chinese invention patent(201510055743.3) with title of "EIGD-based eigenvalue computation method for large-scale delayed cyber-physical power systems" , proposed an eigenvalue method based on explicit infinitesimal generator discretization (EIGD)for large-scale DCPPS. A Chinese invention patent(201510829129.8) with title of "SOD-PS-R algorithm-based calculation method of electromechanical oscillation modes for time-delay power system", proposed an eigenvalue computation method for large-scale DCPPS based on solution operator pseudo-spectral discretization (SOD-PS).

The common disadvantage of the SDMs mentioned above is the large dimension of discretized matrices, leading to the large computation burden and long computation time. To solve this problem, the techniques such as Kronecker product and sparse eigenvalue computation have been applied to reduce the number of multiplications between matrices and vectors involved in the eigenvalue computation. But in essence, the dimension of the spectral discretized matrix has not reduced at all. Obviously, the efficiency of SDMs can be significantly improved if the order reduction problem is resolved.

**Summary of the Invention:**

In order to overcome the shortcomings of existing technologies involved in DCPPS, the present invention provides a low-order EIGD-based stability analysis method of delayed cyber-physical power systems, which can reduce the order of the discretized matrix and greatly enhance the computational efficiency of original EIGD.

The low-order EIGD-based stability analysis method of DCPPS includes the following steps:
The dynamic model of DCPPS is established and linearized into a set of delayed differential equations.

The state variables of DCPPS in delayed differential equations are rearranged and partitioned into two parts: delay-free state variables and delayed state variables. When the states of DCPPS is discretized at the past time, the discretization of delay-free state variables is removed and the corresponding dimension of discretized matrix is reduced.

By utilizing the infinitesimal generator, the delayed differential equation is transformed into the ordinary differential equation. Correspondingly, the characteristic equation of DCPPS can be transformed into the general characteristic equation described by the infinitesimal generator. The eigenvalues of DCPPS are transformed into eigenvalues of the infinitesimal generator.

Since the infinitesimal generator has infinite eigenvalue, it is necessary to discretize the infinitesimal generator. Firstly, delay interval is discretized into discrete function space by choosing several suitable discrete points, so that the continuous function is discretized into block vectors. Secondly, the function value at the discrete point can be evaluated by Lagrange interpolation polynomial. Thirdly, the discretized matrix of infinitesimal generator is generated by arranging and rewriting the state equation at these discrete points, so that the infinite-dimensional eigenvalue problem is transformed into the finite-dimensional problem.

Based on the one-to-one spectral mapping relation between DCPPS and infinitesimal generator, the rightmost eigenvalues of DCPPS are captured approximately from the discretized matrix of the infinitesimal generator.

By applying the shift-invert preconditioning technique on the discretized matrix of the infinitesimal generator, the rightmost eigenvalues of infinitesimal generator are transformed into the eigenvalues with the largest moduli. By computing the eigenvalues with the largest moduli of the discretized matrix of the infinitesimal generator after the shift-invert preconditioning, the estimations of the rightmost eigenvalues of the system can be obtained by the inverse transform.

The estimations of the rightmost eigenvalues are refined to exact eigenvalues of delayed power systems, and the obtained exact eigenvalues are used to judge the stability of the power system.

To further optimize the technical scheme, the dynamic model of delayed power system is established and then linearized as a set of delayed differential equations. Specifically, the dynamic model of DCPPS is expanded by Taylor series at the equilibrium point to establish the linearized model of system. Thus, the dynamic model of DCPPS can be described by a set of delayed differential equations.

To further optimize the technical scheme, the dynamic model of DCPPS can be described by the following delayed differential equations:

$$\begin{cases} \Delta \dot{\boldsymbol{x}}(t) = \tilde{\boldsymbol{A}}_0 \Delta \boldsymbol{x}(t) + \sum_{i=1}^{m} \tilde{\boldsymbol{A}}_i \Delta \boldsymbol{x}(t - \tau_i), & t \geq 0 \\ \Delta \boldsymbol{x}(t) = \Delta \boldsymbol{x}(0) = \boldsymbol{\varphi}, & t \in [-\tau_{\max}, 0] \end{cases} \tag{1}$$

where $x \in P^{n \times l}$ is the state variable vector of the power system; $n$ is the total number of system state variables; $t$ is the current operating time; $m$ is the number of time delays; $\tau_1, \cdots, \tau_m$ are the constant time delays and $\tau_{\max}$ is the maximum delay; $\Delta x(t)$ is the increment of the system state variable at $t$; $\Delta x(t-\tau_i)$ is the increment of the system state variable at $t-\tau_i$; $\Delta \dot{x}(t)$ is the derivative of the increment of the system state variable at $t$; $\Delta x(0)$ is the initial value of the system state variable, i.e., the initial status, which is abbreviated as $\varphi$; $\tilde{A}_0 \in P^{n \times n}$ and $\tilde{A}_i \in P^{n \times n}$ ($i=1, ..., m$) represent the dense system state matrix and the sparse delayed state matrices respectively.

In the subsequent analysis, $\tilde{A}_0$ and $\tilde{A}_i$ ($i=1, ..., m$) only have the significance of theoretical analysis. In order to make full use of their sparsity, they can be readily reformulated in augmented form as follows:

$$\begin{cases} \tilde{\boldsymbol{A}}_0 = \boldsymbol{A}_0 - \boldsymbol{B}_0 \boldsymbol{D}_0^{-1} \boldsymbol{C}_0 \\ \tilde{\boldsymbol{A}}_i = \boldsymbol{A}_i - \boldsymbol{B}_i \boldsymbol{D}_0^{-1} \boldsymbol{C}_0 \end{cases} \tag{2}$$

where $A_0 \in \Upsilon^{n \times n}$, $B_0 \in \Upsilon^{n \times l}$, $C_0 \in \Upsilon^{l \times n}$, $D_0 \in \Upsilon^{l \times l}$, $A_i \in \Upsilon^{n \times n}$, $B_i \in \Upsilon^{n \times l}$ ($i=1, ..., m$) are the highly sparse system augmented state matrices, and $l$ is the total number of system algebraic variables.

The characteristic equation of the system corresponding to(1) is:

$$\left( \tilde{\boldsymbol{A}}_0 + \sum_{i=1}^{m} \tilde{\boldsymbol{A}}_i \mathrm{e}^{-\lambda \tau_i} \right) \boldsymbol{v} = \lambda \boldsymbol{v} \tag{3}$$

where $\lambda$ and $v \in X^{n \times 1}$ represent an eigenvalue of DCPPS and its corresponding right eigenvector, respectively.

To further optimize the technical scheme, the state variables of DCPPS should be rearranged. According to whether the corresponding element of the delayed state matrices is 0, system's states are partitioned into delay-free states $\Delta x_1(t) \in P^{n1 \times 1}$ and delayed states $\Delta x_2(t) \in P^{n2 \times 1}$, where $n_1 + n_2 = n$.

Specifically, if the elements of row and column corresponding to a certain state variable are 0 in all delayed state matrices, the variables will be regarded as a delay-free state, and the remaining variables will be delayed states. Accordingly, the first formula of(1) can be rewritten in a partitioned form:

$$\begin{bmatrix} \Delta\dot{x}_1(t) \\ \Delta\dot{x}_2(t) \end{bmatrix} = \begin{bmatrix} A_{11} & A_{12} \\ A_{21} & A_{22} \end{bmatrix} \begin{bmatrix} \Delta x_1(t) \\ \Delta x_2(t) \end{bmatrix} + \sum_{i=1}^{m} \begin{bmatrix} A_{di,11} & A_{di,12} \\ A_{di,21} & A_{di,22} \end{bmatrix} \begin{bmatrix} \Delta x_1(t-\tau_i) \\ \Delta x_2(t-\tau_i) \end{bmatrix} \qquad (4)$$

where $A_{11} \in \mathrm{P}^{n1\times n1}$, $A_{12} \in \mathrm{P}^{n1\times n2}$, $A_{21} \in \mathrm{P}^{n2\times n1}$ and $A_{22} \in \mathrm{P}^{n2\times n2}$ represent the matrices obtained after rewriting and partitioning the system state matrix according to the order and partition of state variables, which are all dense matrices. $A_{di,11} \in \mathrm{P}^{n1\times n1} A_{di,12} \in \mathrm{P}^{n1\times n2}$, $A_{di,21} \in \mathrm{P}^{n1\times n1}$ and $A_{di,22} \in \mathrm{P}^{n2\times n2}$ represent the matrices obtained after rewriting and partitioning the delayed state matrix according to the order and partition of state variables.

$$\begin{cases} A_{di,11} = \mathbf{0}_{11} \\ A_{di,12} = \mathbf{0}_{12} \\ A_{di,21} = \mathbf{0}_{21} \\ A_{di,22} \cong A_{di} \end{cases} \qquad (5)$$

where $0_{11}, 0_{12}$ and $0_{21}$ represent zero matrices with dimensions $n_1 \times n_1, n_1 \times n_2$ and $n_2 \times n_1$, respectively. $\cong$ represents definition, $A_{di,22} \cong A_{di}$ represents defining $A_{di,22}$ as $A_{di}$.

Thus, equation(4) is also written as:

$$\begin{cases} \Delta\dot{x}_1(t) = A_{11}\Delta x_1(t) + A_{12}\Delta x_2(t) \\ \Delta\dot{x}_2(t) = A_{21}\Delta x_1(t) + A_{22}\Delta x_2(t) + \sum_{i=1}^{m} A_{di}\Delta x_2(t-\tau_i) \end{cases} \qquad (6)$$

Correspondingly, the characteristic equation can be reformulated as:

$$\left( \begin{bmatrix} A_{11} & A_{12} \\ A_{21} & A_{22} \end{bmatrix} + \sum_{i=1}^{m} \begin{bmatrix} \mathbf{0} & \mathbf{0} \\ \mathbf{0} & A_{di,22} \end{bmatrix} e^{-\lambda\tau_i} \right) v = \lambda v \qquad (7)$$

Due to existence of exponential term $e^{-\lambda\tau_i}$ ($i=1, ..., m$) in (7), the eigenvalues of the system are infinite.

To further optimize the technical scheme, the state space $X := C([-\tau_{max}, 0], \Upsilon^{n\times 1})$ is Banach space of continuous functions established by mapping the time interval $[-\tau_{max}, 0]$ into $\Upsilon^{n\times 1}$, which endowed with the maximum norm

$$\sup_{\theta \in [-\tau_{max}, 0]} \left| \varphi(\theta) \right| .$$ Banach space is an infinite dimensional space. The solution operator T(h): $X \to X$ denotes the relationship between initial status of the system and the states of the system at a later time.

Specifically, the solution operator is a linear bounded operator, which maps the initial condition $\varphi(\theta) \in X$ at $\theta$ ($-\tau_{max} \leq \theta \leq 0$) into the system state $\Delta x(h+\theta)$ ($= \Delta x_h(\theta)$) at a later time instant $\theta + h(h \geq 0)$. The infinitesimal generator A: $X \to X$ is defined as the derivative of solution operator T($h$)at $h=0$. Here, $C$ denotes the complex functional space.

Substituting the first formula of (1) into the infinitesimal generator $A(h=t)$, a following formula can be obtained:

$$\begin{cases} \Delta\dot{x}_t(\theta) = A\Delta x_t(\theta), \ t \geq 0 \\ \Delta x_0(\theta) = \varphi(\theta) \end{cases} \qquad (8)$$

It can be seen from (8) that delayed differential equation (1) is transformed into an ordinary homogeneous linear differential equation. The coefficient of equation is the infinitesimal generator A and the state is $\Delta x_t$. Besides, characteristic equation and characteristic function of A are:

$$A\varphi = \lambda\varphi \qquad (9)$$

$$\boldsymbol{\varphi}(\theta) = \mathrm{e}^{\lambda\theta}\, \boldsymbol{v}, \quad \boldsymbol{\varphi} \in X, \theta \in [-\tau_{\max}, 0] \qquad (10)$$

This indicates that the eigenvalues of DCPPS is related to the eigenvalues of A, i.e.,

$$\lambda \in \sigma(\mathrm{A}) \qquad (11)$$

where $\sigma(\cdot)$ denotes the set of all the eigenvalues, i.e., spectrum of the matrix or operator. It can be seen from (11) that the computation of eigenvalues for DCPPS can be directly transformed into the computation of eigenvalues from A instead.

To further optimize the technical scheme, given any positive integer $N$, a mesh $\Omega_N$ of $N$+1 distinct discretization points on the past time interval$[-\tau_{\max}, 0]$ is first formed as $\Omega_N := \{\theta_{N,j}, j = 0,1,...,N\}$, satisfying $-\tau_{\max} \le \theta_{N,N} \le \cdots \le \theta_{N,1} \le \theta_{N,0} = 0$. It is supposed that $X_N = (\mathbb{R}^{n\times 1})^{\Omega_N} \simeq \mathbb{R}^{n(N+1)\times 1}$ denotes the discrete function space defined on the mesh $\Omega_N$.

The initial status $\varphi$ of the system is a continuous function on $X$. It can also be denoted as $\varphi \in \Delta(A) \subset X$. The continuous function $\varphi$ can be discretized into a block vector $\boldsymbol{F} = [\boldsymbol{\varphi}_0^{\mathrm{T}}, \cdots, \boldsymbol{\varphi}_N^{\mathrm{T}}]^{\mathrm{T}} \in X_N$ based on the discretized space, where $\varphi_j (j=0, ..., N)$ is an approximate value of the continuous function $\varphi$ at the discrete point $\theta_{N,j}$, i.e., $\varphi_j \approx \varphi(\theta_{N,j}) \in \Upsilon^{n\times 1}$. Let $L_N \Phi$ be a unique Lagrange interpolation polynomial of degree no more than $N$ which satisfies $(L_N\Phi)(\theta_{N,j}) = \varphi_j, j=0, ..., N$.

$$\boldsymbol{\varphi}(\theta) = (L_N \boldsymbol{F})(\theta), \quad \theta \in [-\tau_{\max}, 0] \qquad (12)$$

The characteristic equation corresponding to (1)can be expressed as:

$$\begin{cases} (L_N \boldsymbol{F})'(\theta_{N,k}) = \lambda(L_N \boldsymbol{F})(\theta_{N,j}), \quad j = 1,\cdots,N \\ \tilde{A}_0(L_N \boldsymbol{F})(0) + \sum_{i=1}^{m} \tilde{A}_i(L_N \boldsymbol{F})(-\tau_i) = \lambda(L_N \boldsymbol{F})(0) \end{cases} \qquad (13)$$

The $L_N\Phi$ can be represented by a set of basis of a Chebyshev polynomial with degree no more than $N$.

$$(L_N \boldsymbol{F})(t) = \sum_{j=0}^{N} \boldsymbol{c}_j T_j \left(2\frac{t}{\tau_{\max}} + 1\right) \qquad (14)$$

where $\boldsymbol{c}_j = \left[\left(\boldsymbol{c}_j^{(1)}\right)^{\mathrm{T}} \left(\boldsymbol{c}_j^{(2)}\right)^{\mathrm{T}}\right]^{\mathrm{T}} \in \Upsilon^{n\times 1}$ is a constant vector, $j=0, ..., N$. $\boldsymbol{c}_j^{(1)} \in \mathrm{P}^{n1\times 1}$, $\boldsymbol{c}_j^{(2)} \in \mathrm{P}^{n2\times 1}$. $T_j(\cdot)$ is the Chebyshev polynomial of the first kind and order $j$, i.e., $T_j(\bullet)=\cos(j \arccos(\bullet))$, where 'arccos' denotes arc-cosine function.

The state equation of DCPPS can be rewritten as the following lower-order equations.

$$\begin{cases} \left(A_{11} - \lambda I_{n_1}\right)\boldsymbol{c}_0' + A_{12} \sum_{j=0}^{N} \boldsymbol{c}_j^{(2)} = 0 \\ A_{21}\boldsymbol{c}_0' + \left(A_{22} - \lambda I_{n_2}\right)\sum_{j=0}^{N} \boldsymbol{c}_j^{(2)} + \sum_{i=1}^{m} A_{di} \sum_{j=0}^{N} \boldsymbol{c}_j^{(2)} T_j\left(2\frac{-\tau_i}{\tau_{\max}} + 1\right) = 0 \\ \sum_{j=0}^{N} \boldsymbol{c}_j^{(2)} \frac{2j}{\tau_{\max}} U_{j-1}\left(2\frac{\theta_{N,k}}{\tau_{\max}} + 1\right) = \lambda \sum_{j=0}^{N} \boldsymbol{c}_j^{(2)} T_j\left(2\frac{\theta_{N,k}}{\tau_{\max}} + 1\right), \quad k = 1,\cdots,N \end{cases} \qquad (15)$$

where $\boldsymbol{c}_0' = \sum_{j=0}^{N} \boldsymbol{c}_j^{(1)}$. $U_j(\cdot)$ is the Chebyshev polynomial of the second kind and order $j$.

The pseudo-spectral discretization matrix $A_N$: $X_N \to X_N$ approximating infinitesimal generator $A$ is obtained:

$$A_N = \Pi_N^{-1} \Sigma_N \qquad (16)$$

Where, $\Pi_N \in \Upsilon^{(n+Nn2) \times (n+Nn2)}$ is a companion-type matrix and $\Sigma_N \in \Upsilon^{(n+Nn2) \times (n+Nn2)}$ is a block upper-triangular matrix. They can be specifically denoted as:

$$\Pi_N = \left[ \begin{array}{c|c} I_{n_1} & \mathbf{0} \\ \hline \mathbf{0} & \Pi_N' \otimes I_{n_2} \end{array} \right], \quad \Sigma_N = \begin{bmatrix} R_0 & R_1 & \cdots & R_N \\ & I_{n_2} & & \\ & & \ddots & \\ & & & I_{n_2} \end{bmatrix} \qquad (17)$$

where $I_{n_1}$ and $I_{n_2}$ denote identity matrices with dimensions of $n_1 \times n_1$ and $n_2 \times n_2$, respectively. $\Pi_N' \in \square^{(N+1) \times (N+1)}$ is a sparse and constant companion-type matrix. $Rj$ ($j = 1, \Lambda, N+1$) can be obtained by the simple operation of the system state matrices $\tilde{A}_i$ ($i=0, ..., m$):

$$\begin{cases} R_0 = \begin{bmatrix} A_{11} & A_{12} \\ A_{21} & A_{22} + \sum_{i=1}^{m} A_{di} \end{bmatrix} \\ R_j = \begin{bmatrix} A_{12} \\ A_{22} \end{bmatrix} + \sum_{i=1}^{m} \begin{bmatrix} \mathbf{0} \\ A_{di} \end{bmatrix} T_j \left( -2\dfrac{\tau_i}{\tau_{\max}} + 1 \right), j = 1, \cdots, N \end{cases} \qquad (18)$$

When the multiplication between the matrix $(A_N')^{-1}$ and vector $v$ is computed, matrix $\Gamma'$ is reformulated as the form of $\left[ I_n \quad -\sum_{i=0}^{m} \mathbf{1}_i^{\mathrm{T}} \otimes A_i'' \right]$. The feature of Kronecker product is fully used to reduce the computation burden. Here, $\mathbf{1}_i \in \square^{N \times 1}$ denotes the Lagrange coefficient vector.

The technical scheme is further optimized. The rightmost eigenvalues of system are computed by the implicit restarted Arnoldi method. In the process, the critical eigenvalues with the largest moduli (then gradually deceasing) are computed from the shift-invert matrix of $A_N$, i.e., $(A_N')^{-1} = (\Sigma_N')^{-1} \Pi_N$, with priority. Matrices $(\Sigma_N')^{-1}$ and $\Sigma_N$ have the identical block and sparse structure. The non-zero blocks of $(\Sigma_N')^{-1}$ can be explicitly expressed as (19):

$$(\Sigma_N')^{-1} = \left[ \begin{array}{c} (R_0')^{-1} \Gamma' \\ \hline \left[ 0 \quad I_{Nn_2} \right] \end{array} \right] \qquad (19)$$

where

$$\Gamma' = \begin{bmatrix} I_n & -R_1' & \cdots & -R_N' \end{bmatrix} \qquad (20)$$

$$R_0' = \begin{bmatrix} A_{11} - sI_{n_1} & A_{12} \\ A_{21} & A_{22} - sI_{n_2} + \sum_{i=1}^{m} A_{di} e^{-s\tau_i} \end{bmatrix} \qquad (21)$$

$$R'_j = \left( \begin{bmatrix} A_{12} \\ A_{22} - sI_{n_2} \end{bmatrix} + \sum_{i=0}^{m} \begin{bmatrix} 0 \\ A_{di}e^{-s\tau_i} \end{bmatrix} \right) T_j \left( -2\frac{\tau_i}{\tau_{max}} + 1 \right), \quad j = 1, \cdots, N \qquad (22)$$

$$A''_0 = \begin{bmatrix} A_{12} \\ A_{22} - sI_{n_2} \end{bmatrix}, A''_i = \begin{bmatrix} 0 \\ A_{di}e^{-s\tau_i} \end{bmatrix} \qquad (23)$$

In (19), $I_{Nn_2}$ denotes identity matrices with dimensions of $Nn_2 \times Nn_2$. In (21)~(23), s denotes the shift point.

Then, the Newton's method is used to refine the estimations of the rightmost eigenvalues and capture the exact eigenvalues of system.

Stability of the system can be judged by accurate eigenvalues $\lambda$. If the real part of $\lambda$ is greater than zero, i.e., Re($\lambda$)> 0, the system is unstable. If all Re($\lambda$)<0, the system is asymptotically stable. If Re($\lambda$)=0, the system is critically stable. Re($\cdot$) denotes the real part of the eigenvalues.

Compared with the prior art, the beneficial effects of the present invention are as follows:

1) The low-order EIGD-based eigenvalue computation method proposed by the present invention is efficiently applied to the stability analysis of system, where the delay effects on system are fully considered.

2) In the presented method, the order of the discretized matrix generated by original EIGD is greatly reduced by removing the unnecessary discretization of delay-free states variables. So as to ensure the high computation accuracy, the computatimal burden is greatly decreased. Especially for large-scale DCPPS, the computational efficiency of the presented method gets very close to the traditional eigenvalue computation method of the power system without time delay. Thus, the efficiency is basically improved compared to original EIGD method.

3) The sparsity in augmented system state matrices and discretized matrix is fully exploited to lower the computational burden involved in the multiplication computation between matrices and vectors.

## Description of figures

The figures together with the application provide further introductions. The exemplary implementation and introductions of this application are exploited to describe the application, and do not restrict this application.

Fig.1 is a flow diagram of the method of the present invention;
Fig.2 is a backbone of Shandong power grid.

Table 1 is the comparison of computational efficiency between the low-order EIGD method and original EIGD method under different parameters.

## Specific implementation

It should be noted that the following details are illustrative and intend to provide further illustration of this application. Unless specified otherwise, all technical and scientific terms used in this paper have the identical meaning to those commonly understood by ordinary technicians in the corresponding technical field.

Note that all terms used here only intend to describe the specific implementation rather than limiting exemplary implementation on the basis of this application. Unless the context otherwise states, the singular also includes the plural. Furthermore, it is believed that when the term "include" is used in this application, it indicates the existence of features, steps, operations, devices, components and/or their combinations.

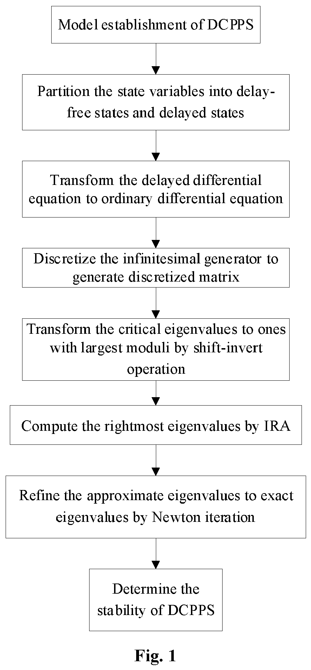

As shown in Fig.1, the low-order EIGD-based eigen-analysis method and the system for large-scale DCPPS includes the following steps:

1) The dynamic model of DCPPS is established and linearized into a set of delayed differential equations, where system state matrix and delayed state matrix can be obtained. Accordingly, the characteristic equation corresponding to DCPPS can also be deduced, which has an infinite number of eigenvalues due to exponential terms.

2) The state variables of DCPPS are rearranged partitioned into delay-free states and delayed states. Subsequently, the system state matrix and the delayed state matrices are rearranged and partitioned into sever blocks, from which the delayed differential equations can be rewritten in a partitioned form. Due to exponential term, the eigenvalues of the system are infinite.

3) By using the infinitesimal generator, the delayed differential equation is transformed into the ordinary differential equation, and the characteristic equation of DCPPS is equivalently transformed into the general characteristic equation. The eigenvalues of DCPPS can be computed from the infinitesimal generator instead.

4) The delay interval is discretized into discrete function space by choosing suitable discrete points, so that the continuous function is discretized into block vectors. The function values at discrete points are estimated by Lagrange interpolation polynomials, and the state equations at these discrete points are arranged and rewritten to generate the discretization matrix of infinitesimal generator. Accordingly, the eigen-problem of infinite dimension is transformed into the finite-dimension eigen-problem.

5) Based on the one-to-one spectral mapping relation between DCPPS and infinitesimal generator, the rightmost eigenvalues of DCPPS are captured approximately from the discretized matrix of the infinitesimal generator.

6) The IRA is used to calculate the eigenvalues with the largest moduli of the discretized matrix of the infinitesimal generator after the shift-invert preconditioning obtained in step 4, the estimations of the rightmost eigenvalues of the system can be obtained by the inverse transform.

7) Newton iteration method is adopted to refine the approximate eigenvalues of discretization matrix computed in step 6, so as to obtain the exact eigenvalues and eigenvectors of DCPPS.

8) The accurate eigenvalues obtained in step 7 are used to determine the stability of the system.

In step 1, the dynamic of DCPPS can be described by the following delayed differential equations:

$$
\begin{cases}
\Delta \dot{x}(t) = \tilde{A}_0 \Delta x(t) + \sum_{i=1}^{m} \tilde{A}_i \Delta x(t - \tau_i), & t \geq 0 \\
\Delta x(t) = \Delta x(0) = \varphi, & t \in [-\tau_{\max}, 0]
\end{cases}
\tag{1}
$$

where $x \in P^{n \times l}$ is the state variable vector of the power system; n is the total number of system state variables; $t$ is the current operating time; $m$ is the number of time delays; $\tau_1, \cdots, \tau_m$ are the constant time delays and $\tau_{\max}$ is the maximum delay; $\Delta x(t)$ is the increment of the system state variable at $t$; $\Delta x(t-\tau_i)$ is the increment of the system state variable at $t-\tau_i$; $\Delta \dot{x}(t)$ is the derivative of the increment of the system state variable at $t$; $\Delta x(0)$ is the initial value of the system state variable, i.e., the initial status, which is abbreviated as $\varphi$; $\tilde{A}_0 \in P^{n \times n}$ and $\tilde{A}_i \in P^{n \times n}(i=1, ..., m)$ represent the dense system state matrix and the sparse delayed state matrices respectively. In order to make full use of their sparsity, they can be readily formulated in augmented form as follows:

$$
\begin{cases}
\tilde{A}_0 = A_0 - B_0 D_0^{-1} C_0 \\
\tilde{A}_i = A_i - B_i D_0^{-1} C_0
\end{cases}
\tag{2}
$$

where $A_i \in \Upsilon^{n \times n}$, $B_i \in \Upsilon^{n \times l}$, $C_0 \in \Upsilon^{n \times l}$ and $D_0 \in \Upsilon^{l \times l}$ ($i=1, ..., m$) are the highly sparse system augmented state matrices, and $l$ is the total number of system algebraic variables.

The characteristic equation of the system corresponding to (1) is:

$$
\left(\tilde{A}_0 + \sum_{i=1}^{m} \tilde{A}_i e^{-\lambda \tau_i}\right) v = \lambda v
\tag{3}
$$

where $\lambda$ and $v \in X^{n \times 1}$ represent an eigenvalue of DCPPS and its corresponding right eigenvector, respectively.

In step 2, the state variables of DCPPS are rearranged. The system's states $\Delta x$ are partitioned into delay-free states $\Delta x_1(t) \in P^{n1 \times 1}$ and delayed states $\Delta x_2(t) \in P^{n2 \times 1}$, where $n_1 + n_2 = n$.

Accordingly, the first formula of (1) in step 1 can be rewritten in a partitioned form as follows:

$$
\begin{bmatrix} \Delta \dot{x}_1(t) \\ \Delta \dot{x}_2(t) \end{bmatrix} = \begin{bmatrix} \tilde{A}_{11} & \tilde{A}_{12} \\ \tilde{A}_{21} & \tilde{A}_{22} \end{bmatrix} \begin{bmatrix} \Delta x_1(t) \\ \Delta x_2(t) \end{bmatrix} + \sum_{i=1}^{m} \begin{bmatrix} 0_{11} & 0_{12} \\ 0_{21} & \tilde{A}_{di} \end{bmatrix} \begin{bmatrix} \Delta x_1(t - \tau_i) \\ \Delta x_2(t - \tau_i) \end{bmatrix}
\tag{4}
$$

where $A_{di,11} \in P^{n1 \times n1}$, $A_{di,12} \in P^{n1 \times n2}$, $A_{di,21} \in P^{n2 \times n1}$ and $A_{di,22} \in P^{n2 \times n2}$ represent the rewritten block submatrices of delayed state matrices according to the partition form of state variables.

$$\begin{cases} A_{di,11} = \mathbf{0}_{11} \\ A_{di,12} = \mathbf{0}_{12} \\ A_{di,21} = \mathbf{0}_{21} \\ A_{di,22} \Box A_{di} \end{cases} \qquad (5)$$

where $0_{11}, 0_{12}$ and $0_{21}$ represent zero matrices with dimensions $n_1 \times n_1$, $n_1 \times n_2$ and $n_2 \times n_1$, respectively. $\cong$ represents definition, $A_{di,22} \cong A_{di}$ represents defining $A_{di,22}$ as $A_{di}$.

Thus, equation(4) is also written as:

$$\begin{cases} \Delta \dot{x}_1(t) = A_{11}\Delta x_1(t) + A_{12}\Delta x_2(t) \\ \Delta \dot{x}_2(t) = A_{21}\Delta x_1(t) + A_{22}\Delta x_2(t) + \sum_{i=1}^{m} A_{di}\Delta x_2(t - \tau_i) \end{cases} \qquad (6)$$

Correspondingly, the characteristic equation can be reformulated as:

$$\left( \begin{bmatrix} A_{11} & A_{12} \\ A_{21} & A_{22} \end{bmatrix} + \sum_{i=1}^{m} \begin{bmatrix} \mathbf{0} & \mathbf{0} \\ \mathbf{0} & A_{di,22} \end{bmatrix} e^{-\lambda \tau_i} \right) v = \lambda v \qquad (7)$$

Due to exponential term $e^{-\lambda \tau_i}$ ($i$=1, ..., $m$), the eigenvalues of the system are infinite.

In step 3, the state space $X := C([-\tau_{max}, 0], \Upsilon^{n \times 1})$ is Banach space of continuous functions established by mapping the time interval $[-\tau_{max}, 0]$ into $\Upsilon^{n \times 1}$ which endowed with the maximum norm $\sup_{\theta \in [-\tau_{max}, 0]} |\varphi(\theta)|$. Banach space is an infinite dimensional space. The solution operator $T(h): X \rightarrow X$ denotes the relationship between initial status of the system and the system state at a later time. The solution operator is a linear bounded operator, which maps the initial condition $\varphi(\theta) \in X$ at $\theta$ ($-\tau_{max} \leq \theta \leq 0$) into the system state $\Delta x(h+\theta)$ ($=\Delta x_h(\theta)$) at a later time instant $\theta + h(h \geq 0)$. The infinitesimal generator $A: X \rightarrow X$ is defined as the derivative of solution operator T($h$)at h=0. Substituting the first formula of (1) into the infinitesimal generator A, a following formula can be obtained:

$$\begin{cases} \dfrac{d\Delta x_t}{dt} = A \, \Delta x_t, \ t \geq 0 \\ \Delta x_t(0) = \varphi \end{cases} \qquad (8)$$

It can be seen from (8) that delayed differential equation (1) is transformed into an ordinary homogeneous linear differential equation. The coefficient of equation is the infinitesimal generator A and the state variable is $\Delta x_t$. Besides, characteristic equation and characteristic function of A are:

$$A \varphi = \lambda \varphi \qquad (9)$$

$$\varphi(\theta) = e^{\lambda \theta} v, \quad \varphi \in X, \theta \in [-\tau_{max}, 0] \qquad (10)$$

This indicates that the eigenvalues of DCPPS is related to the spectrum of A.

$$\lambda \in \sigma(A) \qquad (11)$$

where $\sigma(\cdot)$ denotes the set of all the eigenvalues, i.e., spectrum of the matrix or operator. It can be seen from (11) that the computation of eigenvalues for delayed power system can be directly transformed into the computation of eigenvalues from Ainstead.

In step 4, given any positive integer $N$, a mesh $\Omega_N$ of $N+1$ distinct discretization points on the past time interval $[-\tau_{max}, 0]$ is first formed as $\Omega_N := \{\theta_{N,j}, j = 0,1,...,N\}$, satisfying $-\tau_{max} \leq \theta_{N,N} \leq \cdots \leq \theta_{N,1} \leq \theta_{N,0} = 0$. It is supposed that $X_N = (R^{n \times 1})^{\Omega_N} \approx R^{(N+1)n \times 1}$ denotes the discrete function space defined on the mesh $\Omega_N$. Therefor, any continuous function $\varphi \in \Delta(A) \subset X$ on $X$ can be discretized into a block vector $F = [\varphi_0^T, \cdots, \varphi_N^T]^T \in X_N$, where discrete function $\varphi_j$ ($j$=0, ..., $N$) is an approximate value of the continuous function $\varphi$ at the discrete point $\theta_{N,j}$, i.e., $\varphi j \approx \varphi(\theta_{N,j}) \in \Upsilon^{n \times 1}$. Let $L_N \Phi$ be a unique Lagrange interpolation polynomial of degree no more than $N$ which satisfies $(L_N \Phi)(\theta_{N,j}) = \varphi_j$, $j$=0, ..., $N$.

$$\varphi(\theta) = (L_N F)(\theta), \quad \theta \in [-\tau_{max}, 0] \tag{12}$$

The characteristic equation corresponding to (1) in step 1 can be expressed as:

$$\begin{cases} (L_N \boldsymbol{\Phi})'(\theta_{N,j}) = \lambda (L_N \boldsymbol{\Phi})(\theta_{N,j}), & j = 1, \cdots, N \\ \tilde{A}_0 (L_N \boldsymbol{\Phi})(0) + \sum_{i=1}^{m} \tilde{A}_i (L_N \boldsymbol{\Phi})(-\tau_i) = \lambda (L_N \boldsymbol{\Phi})(0) \end{cases} \tag{13}$$

The $L_N \Phi$ can be represented by a set of basis of a Chebyshev polynomial with degree no more than $N$.

$$(L_N \boldsymbol{\Phi})(t) = \sum_{j=0}^{N} \boldsymbol{c}_j T_j \left( 2\frac{t}{\tau_{max}} + 1 \right) \tag{14}$$

where $\boldsymbol{c}_j = \left[ \left( \boldsymbol{c}_j^{(1)} \right)^T \left( \boldsymbol{c}_j^{(2)} \right)^T \right]^T \in \Upsilon^{n \times 1}$ is a constant vector, $j$=0, ..., $N$. $\boldsymbol{c}_j^{(1)} \in P^{n1 \times 1}$, $\boldsymbol{c}_j^{(2)} \in P^{n2 \times 1}$. $T_j(\cdot)$ is the Chebyshev polynomial of the first kind and order $j$, i.e., $T_j(\bullet) = \cos(j \arccos(\bullet))$, where 'arccos' denotesarc-cosine function.

The state equation of DCPPS can be rewritten as the following lower-order equations refine the approximation values.

$$\begin{cases} \left( A_{11} - \lambda I_{n_1} \right) \boldsymbol{c}_0' + A_{12} \sum_{j=0}^{N} \boldsymbol{c}_j^{(2)} = 0 \\ A_{21} \boldsymbol{c}_0' + \left( A_{22} - \lambda I_{n_2} \right) \sum_{j=0}^{N} \boldsymbol{c}_j^{(2)} + \sum_{i=1}^{m} A_{di} \sum_{j=0}^{N} \boldsymbol{c}_j^{(2)} T_j \left( 2\frac{-\tau_i}{\tau_{max}} + 1 \right) = 0 \\ \sum_{j=0}^{N} \boldsymbol{c}_j^{(2)} \frac{2j}{\tau_{max}} U_{j-1} \left( 2\frac{\theta_{N,k}}{\tau_{max}} + 1 \right) = \lambda \sum_{j=0}^{N} \boldsymbol{c}_j^{(2)} T_j \left( 2\frac{\theta_{N,k}}{\tau_{max}} + 1 \right), & k = 1, \cdots, N \end{cases} \tag{15}$$

where $\boldsymbol{c}_0' = \sum_{j=0}^{N} \boldsymbol{c}_j^{(1)}$. $U_j(\cdot)$ is the Chebyshev polynomial of the second kind and order $j$.

In step 4, the pseudo-spectral discretization matrix $A_N: X_N \to X_N$ approximating infinitesimal generatorA is obtained:

$$A_N = \Pi_N^{-1} \Sigma_N \tag{16}$$

Where, $\Pi_N \in \Upsilon^{(n+Nn2) \times (n+Nn2)}$ is a companion-type matrix and $\Sigma_N \in \Upsilon^{(n+Nn2) \times (n+Nn2)}$ is a block upper-triangular matrix. They can be specifically denoted as:

$$\Pi_N = \left[ \begin{array}{c|c} I_{n_1} & \mathbf{0} \\ \hline \mathbf{0} & \Pi'_N \otimes I_{n_2} \end{array} \right], \quad \Sigma_N = \begin{bmatrix} R_0 & R_1 & \cdots & R_N \\ & I_{n_2} & & \\ & & \ddots & \\ & & & I_{n_2} \end{bmatrix} \qquad (17)$$

where $I_{n_1}$ and $I_{n_2}$ denote identity matrices with dimensions of $n_1 \times n_1$ and $n_2 \times n_2$, respectively. $\Pi'_N \in \square^{(N+1)\times(N+1)}$ is a sparse and constant companion-type matrix. $Rj$ ($j$ = 1, $\Lambda$, $N$+1) can be obtained by the simple operation of the system state matrices:

$$\begin{cases} R_0 = \begin{bmatrix} A_{11} & A_{12} \\ A_{21} & A_{22} + \sum_{i=1}^{m} A_{di} \end{bmatrix} \\ R_j = \left( \begin{bmatrix} A_{12} \\ A_{22} \end{bmatrix} + \sum_{i=1}^{m} \begin{bmatrix} \mathbf{0} \\ A_{di} \end{bmatrix} \right) T_j\left(-2\frac{\tau_i}{\tau_{max}}+1\right), j=1,\cdots,N \end{cases} \qquad (18)$$

In step 4, when the multiplication between the matrix $(A'_N)^{-1}$ and vector $v$ is computed, matrix $\Gamma'$ is reformulated as the form of $\left[ I_n \quad -\sum_{i=0}^{m} \mathbf{1}_i^{\mathrm{T}} \otimes A''_i \right]$. The feature of Kronecker product is fully used to reduce the computation burden. Here, $\mathbf{1}_i \in \square^{N\times1}$ denotes the Lagrange coefficient vector.

In step 6, the rightmost eigenvalues of system are computed by the implicit restarted Arnoldi method. In the process, the critical eigenvalues with the largest moduli (then gradually deceasing) are computed from the shift-invert matrix of $A_N$, i.e., $(A'_N)^{-1} = (\Sigma'_N)^{-1}\Pi_N$, with priority. Matrices $(\Sigma'_N)^{-1}$ and $\Sigma_N$ have the identical block and sparse structure. The non-zero blocks of $(\Sigma'_N)^{-1}$ can be explicitly expressed as (19):

$$(\Sigma'_N)^{-1} = \left[ \begin{array}{c} (R'_0)^{-1}\Gamma' \\ \hline \begin{bmatrix} 0 & I_{Nn_2} \end{bmatrix} \end{array} \right] \qquad (19)$$

where

$$\Gamma' = \begin{bmatrix} I_n & -R'_1 & \cdots & -R'_N \end{bmatrix} \qquad (20)$$

$$R'_0 = \begin{bmatrix} A_{11} - sI_{n_1} & A_{12} \\ A_{21} & A_{22} - sI_{n_2} + \sum_{i=1}^{m} A_{di}\mathrm{e}^{-s\tau_i} \end{bmatrix} \qquad (21)$$

$$R'_j = \left( \begin{bmatrix} A_{12} \\ A_{22} - sI_{n_2} \end{bmatrix} + \sum_{i=0}^{m} \begin{bmatrix} \mathbf{0} \\ A_{di}\mathrm{e}^{-s\tau_i} \end{bmatrix} \right) T_j\left(-2\frac{\tau_i}{\tau_{max}}+1\right), \; j=1, \cdots, N \qquad (22)$$

$$A''_0 = \begin{bmatrix} A_{12} \\ A_{22} - sI_{n_2} \end{bmatrix}, A''_i = \begin{bmatrix} \mathbf{0} \\ A_{di}\mathrm{e}^{-s\tau_i} \end{bmatrix} \qquad (23)$$

In (19), $I_{Nn_2}$ denotes identity matrices with dimensions of $Nn_2 \times Nn_2$. In (21)~(23), s denotes the shift point.

In step 7, the Newton's method disclosed by the Chinese application 201510055743.3 is used to refine the estimations of the rightmost eigenvalues and capture the exact eigenvalues of system.

In step 8, stability of the system can be judged by accurate eigenvalues $\lambda$ obtained in step 7. Re(•) denotes the real part of the eigenvalues. If the real part of $\lambda$ is greater than zero, i.e., Re($\lambda$)> 0, the system is unstable. If all Re($\lambda$)<0, the system is asymptotically stable. If Re($\lambda$)=0, the system is critically stable.

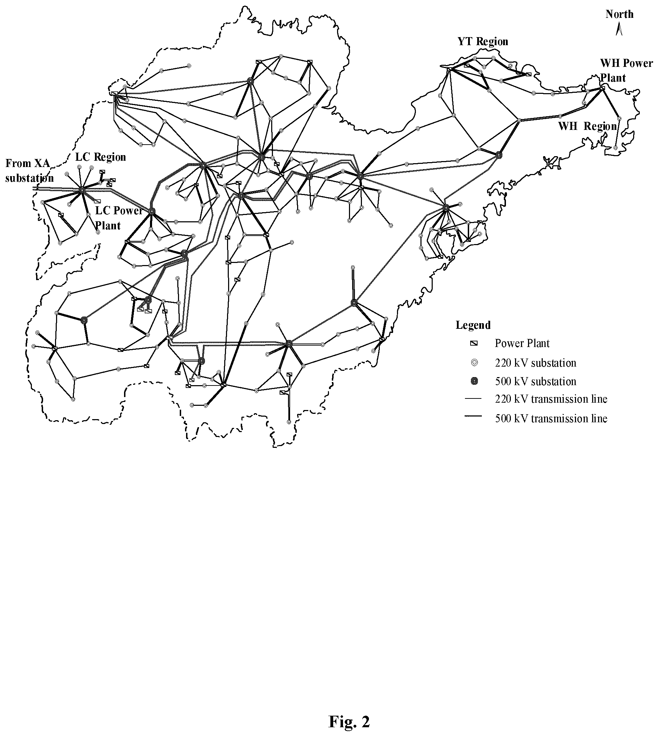

A more detailed test example is given below. As shown in Fig. 2, a real-life large transmission system, i.e., Shandong power grid system, is used to verify the high efficiency of low-order EIGD method proposed in this invention. All tests are executed on MATLAB and an Intel 3.4GHz desktop computer with 8GB RAM

The system has 516 buses, 114 generators, 936 transformers and transmission lines, and 299 loads. According to eigen-analysis, it is known that the system has an inter-area oscillation mode with frequency of 0.78 Hz and damping ratio of 6.97%, where generators in the western LC region oscillate against those in the eastern YT and WH regions. To further enhance the damping ratio of the mode, two wide-area Linear Quadratic Regulators are installed on units #1 and #2 in LC power plant. The controllers respectively use the relative rotor speed and power angle between #3 in WH and #1 or #2 in LC as the wide-area feedback signals. The gain of the controllers are 40 and 0.125, respectively. The comprehensive time delays in the two channels are 90 and 100 ms, respectively. The number of state variables and algebraic variables are $n$ = 1128 and $l$ = 5765, respectively.

In order to verify the efficiency of the presented low-order EIGD method, the computation efficiency under different parameters is given in table 1, compared with the original EIGD method and the traditional eigenvalue method without any delay. Aiming at compute the critical eigenvalues of the system, $N$=10 and 20, three shifts s=7j and 13j are specified, and $r$=20 and 50 eigenvalues are required to be computed for each shift. In this system, the dimension of discretized matrix obtained by the original EIGD method is approximately $N$ times larger than that of discretized matrix for the system without time delay whose dimension is only slightly smaller than the dimension of the matrix generated by the low-order EIGD method. The low-order EIGD method takes roughly same iterations as the original EIGD method, and consumes about 1/16~1/8 (0.08~0.12) CPU time of the original method. The saving time is more as the scale of the system increases. For the same system, the computation time increases with the increase of $N$ and $r$. Compared with the traditional eigenvalue method for the system without time delay, the computational time of low-order EIGD method for one iteration is slightly higher, and the total consumption time is still on the same order of magnitude.

**Table 1**

| s | N | r | low-order **EIGD** | | | Original **EIGD** | | | Speed up | W/O delay | | |
|---|---|---|------|------|-------------|------|------|-------------|----------|------|------|-------------|
| | | | Dim | Iter. | Iter./ Time (s) | Dim | Iter. | Iter./ Time (s) | | Dim | Iter. | Iter./ Time (s) |
| 7j | 10 | 20 | 1248 | 5 | 0.20 | 12408 | 5 | 1.19 | 0.06 | 1128 | 6 | 0.13 |
| 13j | 10 | 20 | 1248 | 7 | 0.32 | 12408 | 6 | 1.76 | 0.07 | 1128 | 8 | 0.23 |
| 7j | 20 | 20 | 1368 | 5 | 0.23 | 23688 | 5 | 2.23 | 0.10 | 1128 | 6 | 0.13 |
| 13j | 20 | 20 | 1368 | 7 | 0.38 | 23688 | 7 | 3.70 | 0.10 | 1128 | 8 | 0.23 |
| 7j | 20 | 50 | 1368 | 7 | 1.28 | 23688 | 7 | 14.72 | 0.08 | 1128 | 7 | 0.73 |
| 13j | 20 | 50 | 1368 | 4 | 0.86 | 23688 | 4 | 10.29 | 0.06 | 1128 | 4 | 0.50 |

High efficiency of the presented method is achieved by removing the unnecessary discretization of delay-free states. The order of the discretized matrix generated by low-order EIGD is greatly reduced. And the computational burden is greatly decreased. When computing critical eigenvalues of DCPPS by using the low-order EIGD, especially for large-scale DCPPS, the computational efficiency gets very close to the traditional eigenvalue computation method. Compared with the original EIGD method, the efficiency of low-order EIGD method can be improved by about 10 times.

The above mentioned is only a preferred embodiment of this application and does not limit this application. For ordinary skill in the art, the application can be changed and improved in various forms. Any modification, equivalent replacement, improvement, etc. made within the spirit and principles of this application should be included in the protection scope of this application.

**Claims**

**1.** A low-order explicit infinitesimal generator discretization(EIGD) based stability analysis method of delayed cyber-physical power systems(DCPPS), **characterized in that** the method includes the following steps:

the dynamic model of DCPPS is established and linearized into a set of delayed differential equations;

the state variables of DCPPS in delayed differential equations are rearranged and partitioned into two parts: delay-free state variables and delayed state variables; when the states of DCPPS is discretized at the past time, the discretization of delay-free state variables removed and the corresponding dimension of discretized matrix is reduced;

by utilizing the infinitesimal generator, the delayed differential equation is transformed into the ordinary differential equation; correspondingly, the characteristic equation of DCPPS can be transformed into the general characteristic equation that is described by the infinitesimal generator; the eigenvalues of DCPPS are transformed into eigenvalues of the infinitesimal generator;

since eigenvalue problem of the infinitesimal generator is an infinite-dimensional problem, it is necessary to discretize the infinitesimal generator; firstly, delay interval is discretized into discrete function space by choosing several suitable discrete points, so that the continuous function is discretized into block vectors; secondly, the function value at the discrete point can be evaluated by Lagrange interpolation polynomial; thirdly, the discretized matrix of infinitesimal generator is generated by arranging and rewriting the state equation at these discrete points, so that the infinite dimensional eigenvalue problem is transformed into the finite dimensional problem; based on the one-to-one spectral mapping relation between DCPPS and infinitesimal generator, the rightmost eigenvalues of DCPPS are captured approximately from the discretized matrix of the infinitesimal generator; applying the shift-invert preconditioning technique on the discretized matrix of the infinitesimal generator, the rightmost eigenvalues of infinitesimal generator are transformed into the eigenvalues with the largest moduli; by computing the eigenvalues with the largest moduli of the discretized matrix of the infinitesimal generator after the shift-invert preconditioning, the estimations of the rightmost eigenvalues of the system can be obtained by the inverse transform;

the estimations of the rightmost eigenvalues are refined to exact eigenvalues of DCPPS, and the obtained exact eigenvalues are used to judge the stability of the power system.

2. The low-order EIGD-based stability analysis method of DCPPS according to claim 1, **characterized in that** the step of establishing and linearizing the dynamic model of DCPPS into a set of delayed differential equations comprising: the dynamic model of DCPPS is expanded by Taylor series at the equilibrium point to established the linearized model of system, the dynamic of DCPPS can be described by delayed differential equations.

3. The low-order EIGD-based stability analysis method of DCPPS according to claim 1, **characterized in that** the delayed differential equations which can describe the dynamic of DCPPS are as follows:

$$\begin{cases} \Delta \dot{x}(t) = \tilde{A}_0 \Delta x(t) + \sum_{i=1}^{m} \tilde{A}_i \Delta x(t - \tau_i), & t \geq 0 \\ \Delta x(t) = \Delta x(0) = \varphi, & t \in [-\tau_{\max}, 0] \end{cases} \qquad (1)$$

where $x \in \mathrm{R}^{n \times l}$ is the state variable vector of the power system; $n$ is the total number of system state variables; $t$ is the current operating time; $m$ is the number of time delays; $\tau_1, \cdots, \tau_m$ are the constant time delays and $\tau_{\max}$ is the maximum delay; $\Delta x(t)$ is the increment of the system state variable at $t$; $\Delta x(t-\tau_i)$ is the increment of the system state variable at $t-\tau_i$; $\Delta \dot{x}(t)$ is the derivative of the increment of the system state variable at $t$; $\Delta x(0)$ is the initial value of the system state variable, i.e., the initial status, which is abbreviated as $\varphi$; $\tilde{A}_0 \in \mathrm{P}^{n \times n}$ and $\tilde{A}_i \in \mathrm{P}^{n \times n}$ ($i$=1, ..., $m$) represent the dense system state matrix and the sparse delayed state matrices respectively;

wherein, $\tilde{A}_0$ and $\tilde{A}_i$ can be readily reformulated in augmented form as follows:

$$\begin{cases} \tilde{A}_0 = A_0 - B_0 D_0^{-1} C_0 \\ \tilde{A}_i = A_i - B_i D_0^{-1} C_0 \end{cases} \qquad (2)$$

where $A_0 \in \Upsilon^{n \times n}$, $B_0 \in \Upsilon^{n \times l}$, $C_0 \in \Upsilon^{n \times l}$, $D_0 \in \Upsilon^{l \times l}$, $A_i \in \Upsilon^{n \times n}$, $B_i \in \Upsilon^{n \times l}$ ($i$=1, ..., $m$) are the highly sparse system augmented state matrices, and $l$ is the total number of system algebraic variables;

the characteristic equation of the system corresponding to(1) is:

$$\left(\tilde{A}_0 + \sum_{i=1}^{m} \tilde{A}_i e^{-\lambda \tau_i}\right) v = \lambda v \qquad (3)$$

where $\lambda$ and $v \in X^{n \times 1}$ represent an eigenvalue of DCPPS and its corresponding right eigenvector, respectively.

4. The low-order EIGD-based stability analysis method of DCPPS according to claim 3, **characterized in that** the state variables of DCPPS should be rearranged. according to whether the corresponding element of the delayed state matrices $\tilde{A}_i$ is 0, system's states are partitioned into delay-free states $\Delta x_1(t) \in P^{n1 \times 1}$ and delayed states $\Delta x_2(t) \in P^{n2 \times 1}$, where $n_1 + n_2 = n$.

5. The low-order EIGD-based stability analysis method of DCPPS according to claim 4, **characterized in that** if the elements of row and column corresponding to a certain state variable are 0 in all delayed state matrices, the variables are regarded as a delay-free state, and the remaining variables are delayed states; accordingly, the first formula of(1) can be rewritten in a partitioned form:

$$\begin{bmatrix} \Delta \dot{x}_1(t) \\ \Delta \dot{x}_2(t) \end{bmatrix} = \begin{bmatrix} A_{11} & A_{12} \\ A_{21} & A_{22} \end{bmatrix} \begin{bmatrix} \Delta x_1(t) \\ \Delta x_2(t) \end{bmatrix} + \sum_{i=1}^{m} \begin{bmatrix} A_{di,11} & A_{di,12} \\ A_{di,21} & A_{di,22} \end{bmatrix} \begin{bmatrix} \Delta x_1(t-\tau_i) \\ \Delta x_2(t-\tau_i) \end{bmatrix} \qquad (4)$$

wherein, $A_{11} \in P^{n1 \times n1}, A_{12} \in P^{n1 \times n2}, A_{21} \in P^{n2 \times n1}$ and $A_{22} \in P^{n2 \times n2}$ represent the matrices obtained after rewriting and partitioning the system state matrix according to the order and partition of state variables, which are all dense matrices, $A_{di,11} \in P^{n1 \times n1}$, $A_{di,12} \in P^{n1 \times n2}$, $A_{di,21} \in P^{n2 \times n1}$ and $A_{di,22} \in P^{n2 \times n2}$ represent the matrices obtained after rewriting and partitioning the delayed state matrix according to the order and partition of state variables:

$$\begin{cases} A_{di,11} = \mathbf{0}_{11} \\ A_{di,12} = \mathbf{0}_{12} \\ A_{di,21} = \mathbf{0}_{21} \\ A_{di,22} \cong A_{di} \end{cases} \qquad (5)$$

where $0_{11}, 0_{12}$ and $0_{21}$ zero matrices with dimensions $n_1 \times n_1$, $n_1 \times n_2$ and $n_2 \times n_1$, respectively. $\cong$ represents definition, $A_{di,22} \cong A_{di}$ represents defining $A_{di,22}$ as $A_{di}$;
thus, equation(4) is written as:

$$\begin{cases} \Delta \dot{x}_1(t) = A_{11} \Delta x_1(t) + A_{12} \Delta x_2(t) \\ \Delta \dot{x}_2(t) = A_{21} \Delta x_1(t) + A_{22} \Delta x_2(t) + \sum_{i=1}^{m} A_{di} \Delta x_2(t-\tau_i) \end{cases} \qquad (6)$$

correspondingly, the characteristic equation can be reformulated as:

$$\left(\begin{bmatrix} A_{11} & A_{12} \\ A_{21} & A_{22} \end{bmatrix} + \sum_{i=1}^{m} \begin{bmatrix} \mathbf{0} & \mathbf{0} \\ \mathbf{0} & A_{di,22} \end{bmatrix} e^{-\lambda \tau_i}\right) v = \lambda v \qquad (7)$$

due to exponential term $e^{-\lambda \tau_i}$ ($i=1, ..., m$), the eigenvalues of the system are infinite.

6. The low-order EIGD-based stability analysis method of DCPPS according to claim 5, **characterized in that** the state space $X := C([-\tau_{max}, 0], \Upsilon^{n \times 1})$ is Banach space of continuous functions established by mapping the past time

interval $[-\tau_{max}, 0]$ into $\Upsilon^{n\times1}$ which endowed with the maximum norm $\underset{\theta\in[-\tau_{max},0]}{\sup}|\boldsymbol{\varphi}(\theta)|$ anach space is an infinite dimensional space; the solution operator $T(h)$: $X \to X$ denotes the relationship between initial status of the system and the system state at a later time;

specifically, the solution operator is a linear bounded operator, which maps the initial condition $\varphi(\theta) \in X$ at $\theta$ ($-\tau_{max} \le \theta \le 0$) into the system state $\Delta x(h+\theta)$ $(= \Delta x_h(\theta))$ at a later time instant $\theta + h(h \ge 0)$; the infinitesimal generator $A$: $X \to X$ is defined as the derivative of solution operator $T(h)$ at $h=0$; $C$ denotes the complex functional space;

substituting the first formula of (1) into the infinitesimal generator $A(h=t)$, a following formula can be obtained:

$$\begin{cases} \dfrac{\mathrm{d}\Delta \boldsymbol{x}_t}{\mathrm{d}t} = \boldsymbol{A}\ \Delta \boldsymbol{x}_t, \ t \ge 0 \\ \Delta \boldsymbol{x}_t(0) = \boldsymbol{\varphi} \end{cases} \qquad (\,8\,)$$

it can be seen from (8) that delayed differential equation (1) is transformed into an ordinary homogeneous linear differential equation; the coefficient of equation is the infinitesimal generator $A$ and the state variable is $\Delta x_t$; characteristic equation and characteristic function of $A$ are:

$$\mathrm{A}\,\boldsymbol{\varphi} = \lambda\boldsymbol{\varphi} \qquad (\,9\,)$$

$$\boldsymbol{\varphi}(\theta) = \mathrm{e}^{\lambda\theta}\,\boldsymbol{v}, \quad \boldsymbol{\varphi} \in X, \theta \in [-\tau_{max},\,0] \qquad (\,10\,)$$

this indicates that the eigenvalues of DCPPS is related to the spectrum of A as follows:

$$\lambda \in \sigma(\mathrm{A}) \qquad (\,11\,)$$

where $\sigma(\cdot)$ denotes the set of all the eigenvalues, i.e., spectrum of the matrix or operator; it can be seen from (11) that the computation of eigenvalues for delayed power system can be directly transformed into the computation of eigenvalues from A instead.

7. The low-order EIGD-based stability analysis method of DCPPS according to claim 1, **characterized in that** given any positive integer $N$, a mesh $\Omega_N$ of $N+1$ distinct discretization points on the past time interval $[-\tau_{max}, 0]$ is first formed as $\Omega_N := \{\theta_{N,j}, j = 0,1,...,N\}$, satisfying $-\tau_{max} \le \theta_{N,N} \le \cdots \le \theta_{N,1} \le \theta_{N,0}=0$; it is supposed that $X_N = (R^{n\times1})^{\Omega_N}$; $R^{(N+1)n\times1}$ denotes the discrete function space defined on the mesh $\Omega_N$;

the initial status $\varphi$ of the system is a continuous function on $X$, it can also be denoted as $\varphi \in \Delta(A) \subset X$; the continuous function $\varphi$ can be discretized into a block vector $\boldsymbol{F} = [\boldsymbol{\varphi}_0^T, \cdots, \boldsymbol{\varphi}_N^T]^T \in X_N$ based on the discretized space, where $\varphi_j(j=0, ..., N)$ is an approximate value of the continuous function $\varphi$ at the discrete point $\theta_{N,j}$, i.e., $\varphi_j \approx \varphi(\theta_{N,j}) \in \Upsilon^{n\times1}$; let $L_N\Phi$ be a unique Lagrange interpolation polynomial of degree no more than $N$ which satisfies $(L_N\Phi)(\theta_{N,j}) = \varphi_j$, $j=0, ..., N$;

$$\boldsymbol{\varphi}(\theta) = (L_N\boldsymbol{F})(\theta), \quad \theta \in [-\tau_{max}, 0] \qquad (\,12\,)$$

the characteristic equation corresponding to (1) can be expressed as:

$$\begin{cases} (L_N\boldsymbol{F})'(\theta_{N,k}) = \lambda(L_N\boldsymbol{F})(\theta_{N,j}), \quad j = 1,\cdots,N \\ \tilde{A}_0(L_N\boldsymbol{F})(0) + \displaystyle\sum_{i=1}^{m}\tilde{A}_i(L_N\boldsymbol{F})(-\tau_i) = \lambda(L_N\boldsymbol{F})(0) \end{cases} \qquad (\,13\,)$$

the $L_N\Phi$ can be represented by a set of basis of a Chebyshev polynomial with degree no more than $N$:

$$(L_N\boldsymbol{F})(t) = \sum_{j=0}^{N} \boldsymbol{c}_j T_j\left(2\frac{t}{\tau_{\max}} + 1\right) \qquad (14)$$

where $\boldsymbol{c}_j = \left[\left(\boldsymbol{c}_j^{(1)}\right)^{\mathrm{T}} \left(\boldsymbol{c}_j^{(2)}\right)^{\mathrm{T}}\right]^{\mathrm{T}} \in \Upsilon^{n\times1}$ is a constant vector, $j=0, ..., N$; $\boldsymbol{c}_j^{(1)} \in \mathrm{P}^{n1\times1}$, $\boldsymbol{c}_j^{(2)} \in \mathrm{P}^{n2\times1}$; $T_j(\cdot)$ is the Chebyshev polynomial of the first kind and order $j$, i.e., $T_j(\bullet)=\cos(j \arccos(\bullet))$, where 'arccos' denotes arc-cosine function; the state equation of DCPPS can be rewritten as the following lower-order equations:

$$\begin{cases} \left(\boldsymbol{A}_{11} - \lambda\boldsymbol{I}_{n_1}\right)\boldsymbol{c}_0' + \boldsymbol{A}_{12}\sum_{j=0}^{N}\boldsymbol{c}_j^{(2)} = 0 \\ \boldsymbol{A}_{21}\boldsymbol{c}_0' + \left(\boldsymbol{A}_{22} - \lambda\boldsymbol{I}_{n_2}\right)\sum_{j=0}^{N}\boldsymbol{c}_j^{(2)} + \sum_{i=1}^{m}\boldsymbol{A}_{\mathrm{d}i}\sum_{j=0}^{N}\boldsymbol{c}_j^{(2)}T_j\left(2\frac{-\tau_i}{\tau_{\max}} + 1\right) = 0 \\ \sum_{j=0}^{N}\boldsymbol{c}_j^{(2)}\frac{2j}{\tau_{\max}}U_{j-1}\left(2\frac{\theta_{N,k}}{\tau_{\max}} + 1\right) = \lambda\sum_{j=0}^{N}\boldsymbol{c}_j^{(2)}T_j\left(2\frac{\theta_{N,k}}{\tau_{\max}} + 1\right), \quad k = 1,\cdots,N \end{cases} \qquad (15)$$

where $\boldsymbol{c}_0' = \sum_{j=0}^{N}\boldsymbol{c}_j^{(1)}$. $U_j(\cdot)$ is the Chebyshev polynomial of the second kind and order $j$.

8. The low-order EIGD-based stability analysis method of DCPPS according to claim 7, **characterized in that** the pseudo-spectral discretization matrix $A_N$: $X_N \rightarrow X_N$ approximating infinitesimal generator$A$ is obtained:

$$A_N = \Pi_N^{-1}\Sigma_N \qquad (16)$$

wherein, $\Pi_N \in \Upsilon^{(n+Nn2)\times(n+Nn2)}$ is a companion-type matrix and $\Sigma_N \in \Upsilon^{(n+Nn2)\times(n+Nn2)}$ is a block upper-triangular matrix, $\Pi_N$ and $\Sigma_N$ can be specifically denoted as:

$$\Pi_N = \begin{bmatrix} \boldsymbol{I}_{n_1} & \vdots & \boldsymbol{0} \\ \hline \boldsymbol{0} & \vdots & \Pi_N' \otimes \boldsymbol{I}_{n_2} \end{bmatrix}, \quad \Sigma_N = \begin{bmatrix} \boldsymbol{R}_0 & \boldsymbol{R}_1 & \cdots & \boldsymbol{R}_N \\ & \boldsymbol{I}_{n_2} & & \\ & & \ddots & \\ & & & \boldsymbol{I}_{n_2} \end{bmatrix} \qquad (17)$$

where $I_{n_1}$ and $I_{n_2}$ denote identity matrices with dimensions of $n_1 \times n_1$ and $n_2 \times n_2$, respectively, $\Pi_N' \in \square^{(N+1)\times(N+1)}$ is a sparse and constant companion-type matrix, $Rj$ $(j = 1, \Lambda, N+1)$ can be obtained by the simple operation of the system state matrices:

$$\begin{cases} \boldsymbol{R}_0 = \begin{bmatrix} \boldsymbol{A}_{11} & \boldsymbol{A}_{12} \\ \boldsymbol{A}_{21} & \boldsymbol{A}_{22} + \sum_{i=1}^{m}\boldsymbol{A}_{\mathrm{d}i} \end{bmatrix} \\ \boldsymbol{R}_j = \begin{bmatrix} \boldsymbol{A}_{12} \\ \boldsymbol{A}_{22} \end{bmatrix} + \sum_{i=1}^{m}\begin{bmatrix} \boldsymbol{0} \\ \boldsymbol{A}_{\mathrm{d}i} \end{bmatrix}T_j\left(-2\frac{\tau_i}{\tau_{\max}} + 1\right), j = 1,\cdots,N \end{cases} \qquad (18)$$

when the multiplication between the matrix $\left(A_N'\right)^{-}$ and vector $v$ is computed, matrix $\Gamma$' is reformulated as the form

of $\left[\boldsymbol{I}_n \quad -\sum_{i=0}^{m} \mathbf{1}_i^{\mathrm{T}} \otimes \boldsymbol{A}_i''\right]$; the feature of Kronecker product is fully used to reduce the computation burden., $\mathbf{1}_i \in \square^{N \times 1}$ denotes the Lagrange coefficient vector.

9. The low-order EIGD-based stability analysis method of DCPPS according to claim 8, **characterized in that** the rightmost eigenvalues of system is computed by the implicit restarted Arnoldi method, in the process, the critical eigenvalues with the largest moduli (then gradually deceasing) are computed from the shift-invert matrix of $A_N$, i.e.,

$(\boldsymbol{A}_N')^{-1} = (\boldsymbol{\Sigma}_N')^{-1} \boldsymbol{\Pi}_N$, with priority, Matrices $(\boldsymbol{\Sigma}_N')^{-1}$ and $\sum_N$ have the identical block and sparse structure, the non-zero blocks of $(\boldsymbol{\Sigma}_N')^{-1}$ can be explicitly expressed as (19):

$$(\boldsymbol{\Sigma}_N')^{-1} = \left[\begin{array}{c} (\boldsymbol{R}_0')^{-1}\boldsymbol{\Gamma}' \\ \hline \left[\begin{array}{cc} 0 & \boldsymbol{I}_{Nn_2} \end{array}\right] \end{array}\right] \quad\quad (19)$$

wherein,

$$\boldsymbol{\Gamma}' = \left[\begin{array}{cccc} \boldsymbol{I}_n & -\boldsymbol{R}_1' & \cdots & -\boldsymbol{R}_N' \end{array}\right] \quad\quad (20)$$

$$\boldsymbol{R}_0' = \left[\begin{array}{cc} \boldsymbol{A}_{11} - s\boldsymbol{I}_{n_1} & \boldsymbol{A}_{12} \\ \boldsymbol{A}_{21} & \boldsymbol{A}_{22} - s\boldsymbol{I}_{n_2} + \sum_{i=1}^{m} \boldsymbol{A}_{\mathrm{d}i}\mathrm{e}^{-s\tau_i} \end{array}\right] \quad\quad (21)$$

$$\boldsymbol{R}_j' = \left(\left[\begin{array}{c} \boldsymbol{A}_{12} \\ \boldsymbol{A}_{22} - s\boldsymbol{I}_{n_2} \end{array}\right] + \sum_{i=0}^{m}\left[\begin{array}{c} \boldsymbol{0} \\ \boldsymbol{A}_{\mathrm{d}i}\mathrm{e}^{-s\tau_i} \end{array}\right]\right) T_j\left(-2\frac{\tau_i}{\tau_{\max}} + 1\right), \quad j = 1, \cdots, N \quad\quad (22)$$

$$\boldsymbol{A}_0'' = \left[\begin{array}{c} \boldsymbol{A}_{12} \\ \boldsymbol{A}_{22} - s\boldsymbol{I}_{n_2} \end{array}\right], \boldsymbol{A}_i'' = \left[\begin{array}{c} \boldsymbol{0} \\ \boldsymbol{A}_{\mathrm{d}i}\mathrm{e}^{-s\tau_i} \end{array}\right] \quad\quad (23)$$

in (19), $I_{Nn_2}$ denotes identity matrices with dimensions of $Nn_2 \times Nn_2$. In (21)~(23), s denotes the shift point.

10. The low-order EIGD-based stability analysis method of DCPPS according to claim 2, **characterized in that** the Newton's method is used to refine the estimations of the rightmost eigenvalues and capture the exact eigenvalues of system,
stability of the system can be judged by accurate eigenvalues $\lambda$: if the real part of $\lambda$ is greater than zero, i.e., Re($\lambda$)> 0, the system is unstable; if all Re($\lambda$)<0, the system is asymptotically stable; if Re($\lambda$)=0, the system is critically stable; wherein, Re(•) denotes the real part of the eigenvalues.

Model establishment of DCPPS

↓

Partition the state variables into delay-free states and delayed states

↓

Transform the delayed differential equation to ordinary differential equation

↓

Discretize the infinitesimal generator to generate discretized matrix

↓

Transform the critical eigenvalues to ones with largest moduli by shift-invert operation

↓

Compute the rightmost eigenvalues by IRA

↓

Refine the approximate eigenvalues to exact eigenvalues by Newton iteration

↓

Determine the stability of DCPPS

**Fig. 1**

**North**

**YT Region**

**WH Power Plant**

**WH Region**

**From XA substation**

**LC Region**

**LC Power Plant**

**Legend**

⊠  Power Plant

◎  220 kV substation

●  500 kV substation

——  220 kV transmission line

——  500 kV transmission line

**Fig. 2**

# EP 3 690 771 A1

<table>
<tr><td colspan="2" align="center">INTERNATIONAL SEARCH REPORT</td><td colspan="2">International application No.<br><br>**PCT/CN2018/091537**</td></tr>
<tr><td colspan="4">**A. CLASSIFICATION OF SUBJECT MATTER**<br><br>G06Q 10/06(2012.01)i; G06Q 50/06(2012.01)i; G06F 17/13(2006.01)i; G06F 17/16(2006.01)i<br><br>According to International Patent Classification (IPC) or to both national classification and IPC</td></tr>
<tr><td colspan="4">**B. FIELDS SEARCHED**</td></tr>
<tr><td colspan="4">Minimum documentation searched (classification system followed by classification symbols)<br><br>G06Q; G06F</td></tr>
<tr><td colspan="4">Documentation searched other than minimum documentation to the extent that such documents are included in the fields searched</td></tr>
<tr><td colspan="4">Electronic data base consulted during the international search (name of data base and, where practicable, search terms used)<br><br>CNABS; CNTXT; CNKI; IEEE; VEN: 稳定性, 低阶, 降阶, 离散, 排序, 时滞, 无关, 无穷小, 微分, 特征, 减少, 维数, stab+, low, discret+, lag, irrelevant, infinitesimal, differential, eigenvalue, reduce, dimension+</td></tr>
<tr><td colspan="4">**C. DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>A</td><td colspan="2">CN 104615882 A (SHANDONG UNIVERSITY) 13 May 2015 (2015-05-13)<br>description, paragraphs [0014]-[0090]</td><td>1-10</td></tr>
<tr><td>A</td><td colspan="2">CN 105449665 A (SHANDONG UNIVERSITY) 30 March 2016 (2016-03-30)<br>entire document</td><td>1-10</td></tr>
<tr><td>A</td><td colspan="2">CN 102801158 A (ELECTRIC POWER ECONOMIC TECHNOLOGY RESEARCH INSTITUTE SHANDONG ELECTRIC POWER CORPORATION) 28 November 2012 (2012-11-28)<br>entire document</td><td>1-10</td></tr>
<tr><td>A</td><td colspan="2">CN 103886209 A (NORTH CHINA ELECTRIC POWER UNIVERSITY) 25 June 2014 (2014-06-25)<br>entire document</td><td>1-10</td></tr>
<tr><td colspan="2">☐ Further documents are listed in the continuation of Box C.</td><td colspan="2">☑ See patent family annex.</td></tr>
<tr><td colspan="2">* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed</td><td colspan="2">"T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family</td></tr>
<tr><td colspan="2">Date of the actual completion of the international search<br><br>**13 November 2018**</td><td colspan="2">Date of mailing of the international search report<br><br>**06 December 2018**</td></tr>
<tr><td colspan="2">Name and mailing address of the ISA/CN<br><br>**State Intellectual Property Office of the P. R. China**<br>**No. 6, Xitucheng Road, Jimenqiao Haidian District, Beijing 100088**<br>**China**</td><td colspan="2">Authorized officer</td></tr>
<tr><td colspan="2">Facsimile No. **(86-10)62019451**</td><td colspan="2">Telephone No.</td></tr>
</table>

Form PCT/ISA/210 (second sheet) (January 2015)

**INTERNATIONAL SEARCH REPORT**
Information on patent family members

International application No.

**PCT/CN2018/091537**

| Patent document cited in search report | | | Publication date (day/month/year) | Patent family member(s) | | | Publication date (day/month/year) |
|---|---|---|---|---|---|---|---|
| CN | 104615882 | A | 13 May 2015 | CN | 104615882 | B | 27 June 2017 |
| CN | 105449665 | A | 30 March 2016 | CN | 105449665 | B | 03 October 2017 |
| CN | 102801158 | A | 28 November 2012 | CN | 102801158 | B | 09 July 2014 |
| CN | 103886209 | A | 25 June 2014 | CN | 103886209 | B | 24 August 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510055743

- CN 201510829129